# EUROPÄISCHE PATENTSCHRIFT

(11) **EP 0 543 388 B1**
(45) Veröffentlichungstag und Bekanntmachung des Hinweises auf die Patenterteilung: **31.01.1996**
(21) Anmeldenummer: 92119764.6
(22) Anmeldetag: 20.11.1992
(51) Int. Cl.: F16L 37/10, F16L 55/11, F16L 55/115, F16B 5/06, B65D 45/02, B65D 45/32

(54) **Verbindungseinrichtung**
Connecting device
Dispositif d'assemblage

(30) Priorität: 21.11.1991 DE 4138266
(43) Veröffentlichungstag der Anmeldung: 26.05.1993
(73) Patentinhaber: Möhlmann, Hans H., Dr.-Ing., D-72070 Tübingen (DE)
(72) Erfinder: Möhlmann, Hans H., Dr.-Ing., D-72070 Tübingen (DE)
(74) Vertreter: Patentanwälte Ruff, Beier, Schöndorf und Mütschele

(56) Entgegenhaltungen:
- EP-A- 0 020 987
- DE-C- 67 425
- US-A- 3 733 001

## Beschreibung

Die Erfindung betrifft eine Verbindungseinrichtung nach dem Oberbegriff von Anspruch 1 bzw. Anspruch 2.

Zum lösbaren Verschließen von Behältern sind bereits unterschiedliche Verschlüsse bekannt. So werden zum Beispiel Behälter mit topfförmigen Kappen durch Drehverschlüsse verschlossen, wobei im wesentlichen die Kappe und der Behälter jeweils mit Gewinden versehen und verschraubbar sind. Für erhöhte Anforderungen an die Dichtigkeit kann hier eine eingelegte Dichtung vorgesehen sein. Eine weitere Möglichkeit zum Verschließen von Behältern sind lösbare Schnellverschlüsse, die über einen Hebelmechanismus gegenüber dem Auslaß des Behälters verspannt werden.

Zum lösbaren Verbinden von Abdeckungen, z.B. in einem Kraftfahrzeug, werden Schnappelemente verwendet, die bei einer eventuellen Demontage zerstört werden müssen und nicht mehr wiedereinsetzbar sind. Insbesondere für häufig abnehmbare Abdeckungen, z.B. an Maschinenteilen, die zum Schutz gegen äußere Einflüsse vorgesehen sind, stellt dies einen hohen Materialaufwand dar.

Aus der DE-PS 29 26 730 und der parallelen EP-A1-0 020 987 sind Verschlüsse zum lösbaren Verschließen von stutzenartigen Auslässen von Behältern bekannt. Diese Verschlüsse weisen eine topfförmige Kappe auf, die dichtend an dem jeweiligen Auslaß angeordnet sein kann und den Behälter schließt.

Der Verschluß besteht aus einer inneren topfförmigen Kappe und einem äußeren Öffnungs- bzw. Schließring, die durch Stege miteinander verbunden sind. Die Stege können im Bereich der Kappe freie Enden bzw. Nocken aufweisen, die durch Verdrehen des Schließringes gegenüber der Kappe nach innen ausgelenkt werden. Der lichte Durchmesser der eingeschwenkten Enden ist gegenüber dem der Kappe im Öffnungszustand verkleinert. Bei einer Ausführungsform können die freien Enden der Stege unter eine Hinterschneidung am Auslaß geschwenkt werden.

Durch diese Ausbildung des Verschlusses ist ein schnelles und einfaches Verschließen und Lösen möglich.

Aufgabe der Erfindung ist es, diesen Verschluß weiter zu verbessern und insbesondere eine noch universeller einsetzbare Verbindungseinrichtung zu schaffen.

Diese Aufgabe wird durch die Merkmale der Ansprüche 1 bzw. 2 gelöst.

Es kann somit eine Verbindungseinrichtung geschaffen werden, die mit einem Aufnahmeteil zusammenwirkt und senkrecht zur Verbindungsebene verspannbar, insbesondere verriegelbar und sicherbar angeordnet sein kann. Die sowohl an der Verbindungseinrichtung als auch an dem Aufnahmeteil vorgesehenen, senkrecht zur Verbindungsebene wirkenden Spannmittel können in einer Schließstellung zusammenwirken und halten die Verbindungseinrichtung in einer definierten Lage gegenüber dem Aufnahmeteil. Durch die Anordnung und Ausbildung der Spannmittel können starke Haltekräfte zwischen dem Verbindungsteil und dem Aufnahmeteil wirken, insbesondere eine formschlüssige Verbindung geschaffen werden, die den unterschiedlichen Anwendungsfällen gerecht wird. Senkrecht zur Verbindungsebene wirkende Spannmittel, d.h. sogenannte Axialspannmittel, sind bei herkömmlichen Verschlüssen bekannt, z.B. aus der US-A-37 33 001. Bei Drehverschlüssen wird jedoch ein besonderer Abrieb bei Dichtungen verursacht, was in vielen Fällen unerwünscht ist.

Die Verbindungseinrichtung weist Elemente auf, die vorzugsweise als Innen- und Außenelemente ausgebildet sind und insbesondere konzentrisch zueinander über die Betätigungsglieder verbunden sind. Durch die gelenkige Anbindung der Betätigungsglieder zwischen dem Innen- und Außenelement können diese relativ zueinander bewegt, insbesondere gedreht werden. Dabei werden die Betätigungsglieder von einer selbsthaltenden Öffnungsstellung in eine selbsthaltende Schließstellung übergeführt, indem sie eine Totpunktstellung überwinden.

Um eine Relativbewegung bzw. -drehung der Elemente zueinander zu ermöglichen, wird vorteilhafterweise eines der beiden Elemente ortsfest bzw. drehfest an oder relativ zu dem Aufnahmeteil gehalten, wobei dies insbesondere durch ineinander eingreifende Verdrehsicherungselemente an Verbindungseinrichtung und Aufnahmeteil erfolgen kann. Verdrehsicherheit ist ferner gegeben, wenn ein oder mehrere Verbindungseinrichtungen mit einem Aufnahmeteil verdrehsicher, insbesondere einstückig verbunden sind.

Durch die Relativdrehung der vorzugsweise kreisförmig ausgebildeten Elemente der Verbindungseinrichtung können die Betätigungsglieder radial ausgelenkt werden und in einer Schließstellung radial nach innen oder nach außen weisend angeordnet sein, je nachdem, ob sie von außen an einer Außenfläche des Aufnahmeteils oder von innen an einer Innenfläche des Aufnahmeteils zum Angriff kommen. Der lichte Durchmesser, der nach innen bzw. außen ausgelenkten Betätigungsglieder ist gegenüber dem des Innen- oder Außenelementes kleiner bzw. größer. Dadurch kann ein Angreifen der Betätigungsglieder an dem Aufnahmeteil ermöglicht werden. Es sind mindestens ein oder mehrere, zweckmäßigerweise zwei bis zehn, vorzugsweise vier bis sechs Betätigungsglieder zwischen dem Innen- und Außenelement vorgesehen. Diese können über den Umfang gesehen beliebig verteilt, vorzugsweise in gleichmäßigen Abständen oder paarweise angeordnet sein. Sie weisen vorzugsweise einen sich am zum Eingriff am Aufnahmeteil vorgesehenen Nockenabschnitt anschließenden massiveren Stützabschnitt auf. Die freien Enden der Betätigungsglieder weisen Gelenke, vorzugsweise Filmscharniere, auf und sind an dem Innen- und Außenelement schwenkbar angelenkt. Diejenigen Stellen der Betätigungsglieder, die beim Öffnen und Schließen radial wirkende Kräfte aufnehmen, nämlich die beiden Gelenke und die Stirnfläche bzw. der Nockenabschnitt, bilden einen Winkel miteinander, insbesondere einen spitzen Winkel, wobei die Stirnfläche im Bereich der Spitze bzw. des Scheitels des Winkels liegt. Der Winkel hat mit Vorteil einen kurzen und einen langen Schenkel, wobei das freie Ende des langen Schenkels am drehbaren und das Ende des kurzen Schenkels am drehfesten Element schwenkbar angelenkt sind. Das Betätigungsglied ist bei einer Ausführungsform im wesentlichen von dem langen Schenkel gebildet, der mit Vorteil als massiver Stützabschnitt ausgebildet ist. Am Betätigungsglied ist vorzugsweise eine zum Eingriff am Aufnahmeteil kommende Stirnseite vorgesehen, die im wesentlichen im Bereich des Scheitels des Winkels angeordnet ist. Der spitze Winkel ist mit Vorteil so bemessen, daß der Scheitel des Winkels mit der zum Eingriff am Aufnahmeteil kommenden Stirnseite der Offenstellung der Verbindungseinrichtung im Zwischenraum zwischen den Elementen und in Schließstellung außerhalb des Zwischenraumes angeordnet ist. Der kurze Schenkel des Betätigungsgliedes, der als Nockenabschnitt ausgebildet sein kann, ist vorzugsweise so lang bemessen, daß der lange Schenkel in Schließstellung der Verbindungseinrichtung im wesentlichen radial angeordnet ist. Die Länge der Schenkel und der Winkel kann im wesentlichen so bemessen sein, daß der kurze Schenkel in Offenstellung im wesentlichen parallel, insbesondere tangential und in Schließstellung vorzugsweise im wesentlichen senkrecht, insbesondere radial zum drehfesten Element angeordnet ist. Durch die vorteilhafte Ausbildung der Winkel können die Betätigungsglieder in der Schließstellung durch das bewegbare Element im wesentlichen radial abgestützt sein und Rückstellmomente und -kräfte aus der Schließstellung heraus auf das drehbare Element unterbunden werden.

Durch die an den Betätigungsgliedern angeordneten gelenkigen Verbindungsstege, kann jedes Betätigungsglied einen ungefähr S-förmigen Verlauf aufweisen. Die Betätigungsglieder selbst sind vorzugsweise federnd nachgiebig ausgebildet und/oder gelagert. Sie können ohne eine Gefährdung der Scharniere einen großen Schwenkwinkel und -weg ausführen, so daß sie sicher über die Totpunktstellung laufen und noch ein erheblicher Wirkungsweg und eine große Wirkkraft verbleibt.

Vorzugsweise sind die Betätigungsglieder als Axialspannmittel ausgebildet und weisen an ihrem Nockenabschnitt Spannschrägen auf, die beim Angreifen an mindestens einer Hinterschneidung des Aufnahmeteils mit diesem zusammenwirken. Durch das Auslenken der Betätigungsglieder bis in ihre radial nach innen bzw. außen weisende Endposition wird ein axiales Spannen der Verbindungseinrichtung in Richtung Aufnahmeteil durch diese Schrägen bewirkt. Des weiteren können an dem Aufnahmeteil, insbesondere zu dessen Hinterschneidung, ebenfalls Schrägen vorgesehen sein, an der die Betätigungsglieder geführt werden können. Um ein axiales Spannen zu ermöglichen, ist lediglich an einem der beiden Teile eine Schräge erforderlich.

Ferner ist vorteilhafterweise vorgesehen, daß zur Aufnahme der bei der axialen Spannung auftretenden Axialkräfte die Betätigungsglieder an axial wirkenden Stützflächen der Verbindungseinrichtung anliegen können. Diese Stützflächen sind vorzugsweise Teil einer Ausnehmung und in der Mantelfläche des inneren bzw. äußeren Elementes angeordnet. Die Betätigungsglieder greifen in der Schließstellung vorzugsweise durch diese Ausnehmungen hindurch und liegen mit den Stützabschnitten an der Stützfläche des jeweiligen Elementes an. Die Größe der Stützfläche wird einerseits durch die Manteldicke sowie durch den für den Einschwenkvorgang eines Betätigungsgliedes benötigten Raum in radialer Richtung festgelegt. Es ist ebenfalls denkbar, daß die Stützfläche und/oder die mit ihr zusammenwirkende Fläche der Betätigungsglieder mit einer zusätzlichen Schräge zur Verstärkung der Axialspannung vorgesehen sein kann. Durch diese vorteilhaften Ausbildungen kann die Verbindungseinrichtung hohen Abzugskräften bzw. hohen Haltekräften standhalten und eine sichere Verbindung mit dem Aufnahmeteil bilden. Dies kann durch Anordnen von mehr als vier Betätigungsgliedern unterstützt und verstärkt werden.

Eine vorteilhafte Weiterbildung der Betätigungsglieder ist darin zu sehen, daß die Spannschrägen an dem Nockenabschnitt derart angeordnet sind, daß sie in der Schließstellung außer Eingriff sind und lediglich während des Einschwenkvorganges wirken. Mit Vorteil können in der Schließstellung planparallele Verriegelungsflächen zwischen dem Betätigungsglied und dem Aufnahmeteil sowie zwischen dem Betätigungsglied und der Stützfläche aufeinander wirken und die axiale Spannung halten, ohne daß unter axialer Zugspannung radiale Kräfte in Öffnungsrichtung der Betätigungsglieder entstehen.

Bei einer Ausführungsform sind die Betätigungsglieder in Schließstellung radial federelastisch ausgebildet. Hierbei ist es vorzugsweise vorgesehen, daß an dem Nockenabschnitt der Betätigungsglieder Einführschrägen ausgebildet sind, damit die Verbindungseinrichtung in ihrer Schließstellung durch Aufdrücken auf das Aufnahmeteil aufgeschnappt werden kann.

Ferner ist bevorzugt vorgesehen, daß eines der Elemente im wesentlichen formstabil und eines, vorzugsweise das bewegbare, elastisch ausgebildet ist und eine Federwirkung aufweisen kann. Durch die Gestaltung des drehbaren Elementes kann die Federwirkung des Elementes selbst vorbestimmt werden. Während eines Öffnungs- bzw. Schließvorganges wird eine Totpunktstellung der als Overcenterhebel wirkenden Betätigungsglieder überwunden, die durch die Nachgiebigkeit des das Betätigungsglied radial abstützenden Elementes, das in der Totpunktstellung eine Verformung gegenüber den Endstellungen erfährt, ermöglicht wird. Diese wird durch den größeren Abstand zwischen den Drehpunkten des Betätigungsgliedes als der radiale Abstand zwischen dem Innen- und Außenelement bewirkt. Durch den langen Schenkel des Winkels wird durch eine anfängliche Drehbewegung aus der Offenstellung eine große radiale Einschwenkbewegung des kurzen Schenkels bzw. der Winkelspitze erzielt, wobei eine stetige Zunahme der radialen Kraft bis über die Totpunktstellung hinaus erfolgt. Nach der Totpunktstellung folgt bei weiterer Drehbewegung eine abnehmende Radialbewegung der Stirnfläche bzw. Winkel spitze, wobei durch die noch im wesentlichen radiale Lage des langen Schenkels auch in der Schließstellung der Betätigungsglieder eine große radiale Schließkraft vorhanden ist. Nach der Totpunktstellung wirkt auf die Betätigungsglieder infolge der Schrägstellung der Verbindungslinie zwischen den Drehpunkten des Betätigungsgliedes und der Rückfederung eine Schubkraft zum Einschwenken bzw. Einschnappen in die jeweilige Endstellung. Dies wird durch die Rückfederung des radial abstützenden Elementes und/oder durch die Eigenelastizität des Betätigungsgliedes erzielt. Diese Schubkraft sorgt für eine Sicherung in den Endstellungen, da sie stetig auf die Betätigungsglieder wirkt. Diese Schubkraft wird über die Betätigungsglieder während des Übergangs in die Schließstellung in eine radiale Schließkraft und von dieser über die Axialspannmittel in eine axiale Spannkraft umgesetzt. Die elastische Ausbildung der Elemente kann ebenfalls das Auslenken der Betätigungsglieder bei einem Aufdrückvorgang ermöglichen, wobei die Federkraft eine Rückfederung der Elemente in die ursprüngliche Form bewirken kann und gleichzeitig ein Eingreifen der Betätigungsglieder an einer Ausnehmung eines Aufnahmeteils ermöglicht.

Eine vorteilhafte Ausbildung der Erfindung ist, daB durch die radial auslenkbaren Betätigungsglieder eine Verbindungseinrichtung geschaffen werden kann, die als Verschluß von Behältern, Tuben o.dgl. sowie als Schnellschluß bzw. Schnappverbindung von Behältern eingesetzt werden kann. Das dem Aufnahmeteil zugewandte Element ist vorzugsweise als topfförmige, das Aufnahmeteil übergreifende Kappe ausgebildet und kann an seiner inneren Deckelfläche mit einer Dichtung versehen sein, um für spezielle Anforderungen eine zusätzlich abdichtende Wirkung zu erzielen. Die Verbindungseinrichtung kann bei dieser Anwendungsform an seinem dem Aufnahmeteil zugewandten Element Verdrehsicherungselemente insbesondere in Form von Einkerbungen aufweisen, die mit entsprechenden Verdrehsicherungselementen am Aufnahmeteil zusammenwirken. Durch ein Verdrehen des bewegbaren Elementes relativ zu dem drehfesten Element um 5 bis 180°, in der Regel weniger als 90°, vorzugsweise 10 bis 35°, kann der Verschluß in eine selbsthaltende Schließstellung übergeführt werden. Je geringer der Abstand zwischen dem bewegbaren und drehfesten Element gestaltet ist, um so geringer kann die relative Verdrehung der Elemente sein.

Das Anbringen eines nach der Erfindung ausgebildeten Verschlusses besteht im wesentlichen aus einem Aufsetzvorgang und einem Drehvorgang. Dadurch kann eine einfache und schnelle Befestigung des Verschlusses an dem Behälter geschaffen werden, die ohne großen technischen Aufwand in der Montage automatisiert werden kann. Eine weitere Vereinfachung kann erzielt werden, indem die Verbindungseinrichtung, insbesondere der Verschluß bereits in der Schließstellung auf das Aufnahmeteil, insbesondere auf den zu verschließenden Behälter, aufgedrückt wird.

Ferner ist bevorzugt vorgesehen, daß die Verbindungseinrichtung mit einer Verliersicherung ausgebildet sein kann. Diese kann direkt an dem drehgesicherten Innen- bzw. Außenelement angespritzt und mit dem Aufnahmeteil bzw. einem sich daran anschließenden Körper, z.B. einem Behälter, verbunden sein. Vorteilhaft ist dabei, daß die Verliersicherung nicht drehbar angelenkt zu sein braucht, weil das drehgesicherte Element sich nicht bzw. nur über einen geringen Winkel gegenüber dem Aufnahmeteil verdreht. Die Verliersicherung kann eine die Verbindungseinrichtung haltende Lasche sein.

Besonders vorteilhaft kann die Verliersicherung gleichzeitig als Verdrehsicherung ausgebildet sein. Sie kann durch eine stabile Ausbildung die Haltekräfte der Verdrehsicherung bei dem Schließvorgang aufnehmen, so daß sich eine gesonderte Verdrehsicherung erübrigen kann.

Durch die vorteilhafte Ausbildung der Verbindungseinrichtung, bei der ein Element während seines Verriegelungsvorganges drehgesichert ist, kann ein Verschluß mit Hochvakuumqualität erzielt werden. Durch die Vermeidung von Reibung bzw. von einer Relativdrehung zwischen dem Dichtungselement und dem Aufnahmeteil kann eine Beschädigung der Oberfläche der Dichtung unterbunden werden.

Wie bereits erwähnt, ist eine Ausführung möglich, bei der die Betätigungsglieder in ihrer Schließstellung radial nach außen weisen. Die Betätigungsglieder sind dabei gegenüber der bisher beschriebenen Ausführungen in umgekehrter Lage angeordnet. Diese Verbindungseinrichtung kann bevorzugt als Schnappelement zur Befestigung von z.B. Abdeckungen eingesetzt werden. Dabei kann die Verbindungseinrichtung in der Schließstellung vorgesehen sein und durch einfaches Ein- bzw. Aufdrücken eine Verbindung z.B. zwischen Abdeckung und einem Maschinenteil geschaffen werden. Das Lösen der Verbindung kann unter Zuhilfenahme eines einfachen Schlüssels, der an dem Innenelement angreifen kann, erfolgen. Durch eine Relativdrehung des Innen- bzw. Außenelementes um 5 bis 180°, in der Regel weniger als 90°, vorzugsweise 10 bis 60°, kann ein Öffnen der Verbindungseinrichtung und ein Lösen der Verbindung bewirkt werden. Die Montage der Abdeckung erfolgt in umgekehrter Reihenfolge. Insbesondere kann diese Ausbildung als Tankschloß Anwendung finden, da hier eine wesentliche Vereinfachung der Mechanik und somit Kostenreduzierung sowie eine Verminderung der Drehungsbewegung geschaffen werden kann. Die Axialspannmittel ermöglichen eine rüttelfeste und vibrationsfreie Verbindung.

Ferner kann die Verbindungseinrichtung als Schlauch- bzw. Leitungsverbinder ausgebildet sein. Dabei ist vorgesehen, daß das drehgesicherte Element, insbesondere das Innenelement als Leitungsendstück oder als Endmuffe einer Leitung ausgebildet sein kann. Das zu verbindende, gegenüberliegende Leitungsendstück kann an seinem Ende, insbesondere an der Außenfläche, eine umlaufende Aufnahme oder Rippe aufweisen, in die bzw. hinter die die radial auslenkbaren Betätigungsglieder eingeschwenkt werden können. Die Axialspannmittel ermöglichen eine dichte und den Drücken standhaltende Leitungsverbindung. Gleichzeitig kann das drehgesicherte Element, insbesondere das Innenelement, die Leitungsenden axial fluchtend führen und zueinander festlegen.

Die vorzugsweise aus einem thermoplastischen, insbesondere einem zähen und mindestens teilweise elastischen Kunststoff ausgebildete Verschlußeinrichtung kann den jeweiligen Anwendungsfällen entsprechend unterschiedlich geformt sein. Als Kunststoff ist Polypropylen bevorzugt. Die Verbindungseinrichtung kann, da Hinterschneidungen vermieden werden können, durch ein zweiteiliges Werkzeug ohne Schieber einfach und kostengünstig, z.B. durch Spritzguß, hergestellt werden. Dies ist bereits möglich bei einem maximalen Abstand zwischen der an der Winkel spitze zum Eingriff an dem Aufnahmeteil kommenden Stirnseite und der Ausnehmung für die Stützflächen.

Ferner kann an der Verbindungseinrichtung eine Originalitätssicherung vorgesehen sein, insbesondere indem das drehgesicherte Element mit dem drehbaren Element über eine leicht zerreißbare Überbrückung miteinander verbunden sind. So kann an einer Deckelfläche zum Beispiel eine Schutzfolie o.dgl. aufgeklebt sein, die durch die Relativbewegung des Innen- und Außenelementes nach einmaligem Öffnen zerstört wird. Des weiteren kann die Verbindungseinrichtung mit einer Kindersicherung versehen sein, wobei das Öffnen des Verschlusses gesperrt und nur durch eine zum Beispiel zusätzliche Druck- oder Anhebbewegung ermöglicht ist, um eine Sicherung gegen versehentliches Öffnen vorzusehen.

Des weiteren ist als Vorteil anzusehen, daß die in der Verbindungseinrichtung vorgesehene Verbindungstechnik auch überall dort Einsatz finden kann, wo sonst Gewindeteile verwendet werden. Die Verbindungseinrichtung kann einfacher und schneller montiert werden und ebenfalls große Haltekräfte ausüben. Ferner kann diese in unterschiedlichen Anwendungsbereichen Einsatz finden.

Diese und weitere Merkmale gehen außer aus den Ansprüchen auch aus der Beschreibung und den Zeichnungen hervor, wobei die einzelnen Merkmale jeweils für sich allein oder zu mehreren in Form von Unterkombinationen bei einer Ausführungsform der Erfindung und auf anderen Gebieten verwirklicht sein und vorteilhafte sowie für sich schutzfähige Ausführungen darstellen können, für die hier Schutz beansprucht wird. Ausführungsbeispiele der Erfindung sind in der Zeichnung dargestellt und werden im folgenden näher erläutert. Es zeigen:
- Fig. 1: eine Draufsicht auf eine Verbindungseinrichtung in einer Öffnungs- und Schließstellung;
- Fig. 2: eine Schnittdarstellung entlang der Linie II-II in Fig. 1;
- Fig. 3: eine Draufsicht auf eine Variante einer Verbindungseinrichtung in Öffnungs- und Schließstellung;
- Fig. 4: eine Schnittdarstellung entlang der Linie IV-IV in Fig. 3;
- Fig. 4a: eine Schnittdarstellung einer Variante einer Verbindungseinrichtung nach Fig. 4;
- Fig. 4b: eine Schnittdarstellung einer weiteren Variante einer Verbindungseinrichtung;
- Fig. 5: einen schematischen Schnitt einer Verbindungseinrichtung mit zu verbindenden Leitungsteilen und
- Fig. 6: eine schematische Seitenansicht einer Verbindungseinrichtung mit einer Verliersicherung.

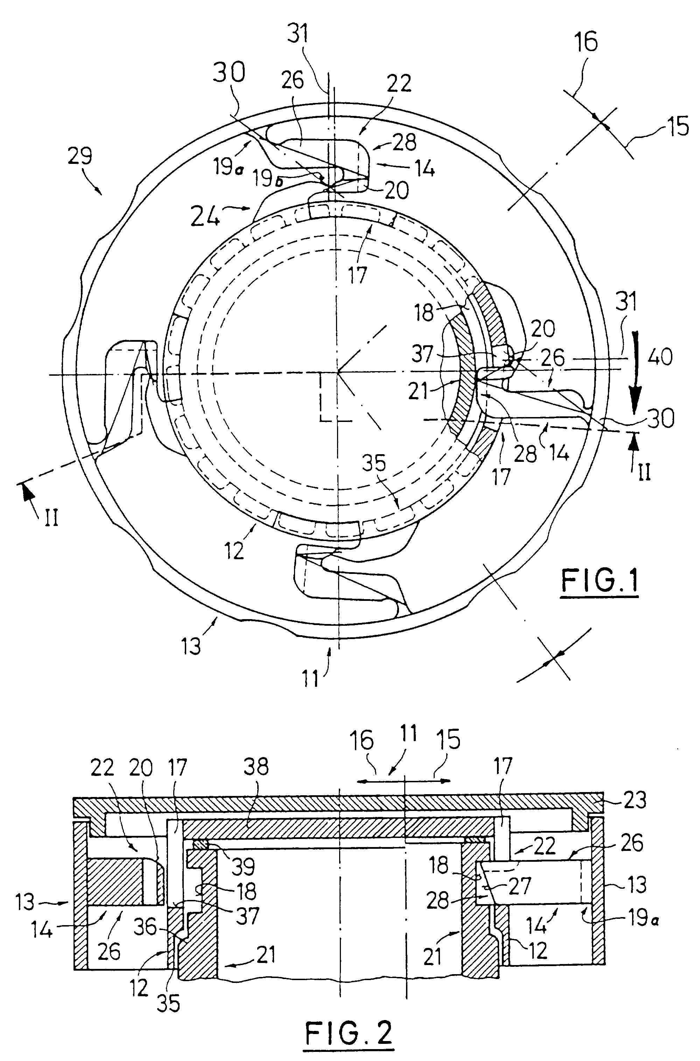

Fig. 1 zeigt eine Verbindungseinrichtung 11 als Verschlußkappe für ein eine Öffnung aufweisendes rohrstutzenförmiges Aufnahmeteil 21 in einer Öffnungs- und Schließstellung 15, 16. Die Verbindungseinrichtung 11 weist ein kappenförmiges Innenelement 12, ein konzentrisch mit Abstand dazu angeordnetes, ringförmiges Außenelement 13 und Betätigungsglieder 14 auf, die zwischen dem Innen- und Außenelement 12, 13 angeordnet und mit diesen gelenkig verbunden sind. Die Teile 12, 13 und 14 der Verbindungseinrichtung 11 sind einstückig ausgebildet und aus Kunststoff, vorzugsweise Polypropylen, bestehend. In einer Öffnungsstellung 16 weisen die Betätigungsglieder 14 gleichlaufend in eine Umlaufrichtung und sind über den Umfang der Verbindungseinrichtung 11 in gleichmäßigen Abständen angeordnet. Die Betätigungsglieder 14 sind durch scharnierartige Verbindungsstege 19 a, b in Form von Filmscharnieren direkt mit dem Innen- und Außenelement 12, 13 verbunden, wobei insbesondere das Außenelement 13 radial federnd nachgiebig ist. Die Betätigungsglieder 14 weisen zwischen den Verbindungsstegen 19 einen massiven Stützabschnitt 26 und einen daran anschließenden Nockenabschnitt 28 auf, die einen Lförmigen Verlauf aufweisen und direkt ineinander übergehen.

Das freie Ende des Stützabschnittes 26 ist dem Außenelement 13 zugewandt und mit diesem über den Verbindungssteg 19a verbunden. In der Öffnungsstellung 16 ist parallel zu dem Stützabschnitt 26 des Betätigungsgliedes 14 an dem Nockenabschnitt 28 der Verbindungssteg 19b angeordnet, der in einen lagerbockartigen Abschnitt 24 übergeht. Dieser ist mit der äußeren Mantelfläche des Innenelementes 12 direkt verbunden. Durch diese Ausgestaltung ist das Betätigungsglied 14 zwischen dem Innen- und Außenelement 12, 13 S-förmig und in sich federnd ausgebildet.

Der Abstand der Drehpunkte der Scharniere 19a und 19b ist größer als der radiale Abstand zwischen Innen- und Außenelement 12 und 13. Die Verbindungslinie zwischen den Scharnieren verläuft sowohl in Öffnungs- als auch in Schließstellung 16, 15 schräg zur radialen Verbindungslinie, wobei die Schräglage in beiden Stellungen entgegengesetzt ist. Dadurch wirken die Betätigungsglieder 14 als Overcenter-hebel und zugleich als axialspannende Verriegelungselemente.

Der Nockenabschnitt 28 weist an seiner zum Innenelement 12 weisenden Oberseite eine Spannschräge 20 auf, die beim Auslenken des Betätigungsgliedes 14 in eine radial nach innen weisende Position in eine Hinterschneidung der Aufnahme 18, vorzugsweise nutenförmig, eines Aufnahmeteiles 21 eingreifen kann. Diese Spannschräge 20 ist als Einführungsschräge des Betätigungsgliedes 14 an der Hinterschneidung der Aufnahme 18 vorgesehen und wird als Wirkfläche in zunehmend erreichter Schließstellung 15 durch eine plane Oberfläche des Nockenabschnittes 28 ersetzt.

Das Innenelement 12 ist im wesentlichen topfförmig ausgebildet und weist dem Betätigungsglied 14 gegenüberliegend Ausnehmungen 17 auf, in die die Betätigungsglieder 14 ein- bzw. hindurchgreifen können. An der Innenseite der Wandung des Innenelementes 12 sind über den Umfang in regelmäßigen Abständen Verdrehsicherungselemente 35 vorgesehen, die in entsprechende Gegenelemente 36 an dem Aufnahmeteil 21 eingreifen können und das Innenelement 12 drehfest am Aufnahmeteil 21 festlegen.

Das Außenelement 13 ist konzentrisch um das Innenelement 12 angeordnet und weist eine vorzugsweise dünnwandige und kreisförmige Gestalt auf. Zusätzlich können an der Außenseite des Außenelementes 13 Drehhilfen 29 vorgesehen sein, die beispielsweise in Form von Griffmulden oder einer gerändelten Oberfläche ausgebildet sein können.

Eine Schließstellung 15, die durch eine Drehung des Außenelementes 13 in Pfeilrichtung 40 erreicht wird, zeigt ein radial nach innen weisendes und ausgelenktes Betätigungsglied 14, welches durch die Ausnehmung 17 des Innenelementes 12 hindurchgeführt ist. Der lichte Durchmesser eines die Nockenabschnitte 28 des Betätigungsgliedes 14 in Schließstellung 15 verbindenden Kreises ist dabei kleiner als der Innendurchmesser des Innenelementes 12, wodurch die Betätigungsglieder 14 in die Aufnahme 18 des jeweiligen Aufnahmeteils 21, z.B. an einem Behälter, eingreifen können.

Fig. 2 zeigt eine Schnittdarstellung entlang der Linie II-II in Fig. 1 der Verbindungseinrichtung 11 in der Öffnungsposition 16 und der Schließposition 15, die mit dem Aufnahmeteil 21 zusammenwirkt. Das im Querschnitt in der Öffnungsstellung 16 dargestellte Betätigungsglied 14 weist im Stützabschnitt 26 einen im wesentlichen rechteckigen Querschnitt auf. An seiner innenliegenden Oberkante nahe der Ausnehmung 17 ist die Spannschräge 20 vorgesehen. Die Unterseite des Betätigungsgliedes 14 liegt in der Ebene der Stützfläche 37 der Ausnehmung 17 und wird in Schließstellung 15 bei Einwirkung von Zugkräften auf die Verschlußkappe oder bei Innendruck im Behälter gegen axiale Auslenkung gesichert.

Die Ausnehmungen 17 in der Mantelfläche des Innenelementes 12 erstrecken sich von dem Deckel boden 38 bis zur Unterseite des Stützabschnittes 26 des Betätigungsgliedes 14 bzw. bis zur Stützfläche 37. Die Ausnehmungen 17 sind in ihrer radialen Abmessung in Abhängigkeit der Größe des Betätigungsgliedes 14 ausgebildet, damit dieses bei einer Auslenkung in die Ausnehmung 17 einschwenkbar ist. Am oberen Ende des Außenelementes 13 kann eine Sichtblende 23 vorgesehen sein, die die Verbindungseinrichtung 11 nach oben vollständig abschließt. Des weiteren kann hier eine Originalitätssicherung angebracht werden, indem man folien- bzw. papierartige Materialien an der Stirnfläche des Außenelementes 13 und der Bodenfläche 38 des Innenelementes 12 anbringt bzw. aufklebt, die nach einmaligem Öffnen der Verbindungseinrichtung 11 aufgerissen werden.

In der Schließstellung 15 weist das ausgelenkte Betätigungsglied 14 radial nach innen und stützt sich mit seiner Unterseite auf der Stützfläche 37 der Ausnehmung 17 ab. Der Nockenabschnitt 28 des Betätigungsgliedes 14 ist in der Ausnahme 18 des Aufnahmeteils 21 angeordnet und verspannt das Innenelement 12 gegen das Aufnahmeteil 21. Das Aufnahmeteil 21 wird durch den oberen Nockenabschnitt 28 gegen die Innenseite des Deckels 38 gedrückt, wobei die Stützfläche 37 als Widerlager das Betätigungsglied 14 gegen das Aufnahmeteil 21 drückt. In der Schließstellung 15 liegen parallel zur Verbindungsebene planparallele Flächen des Aufnahmeteils 21, des Innenelementes 12 und des Betätigungsgliedes 14 aneinander an, um eine Flächenberührung zum besseren Halten der axialen Spannung zu bewirken.

Der Nockenabschnitt 28 ist ferner an seiner Stirnseite mit einer Einführschräge 27 ausgebildet, die es aufgrund der radial federnden Ausbildung bzw. Lagerung der Betätigungsglieder 14 ermöglicht, den Deckel 38 auch bei Schließstellung 15 der Betätigungsglieder 14 durch einfaches Aufdrücken auf die Aufnahme 21 mit dieser zu verbinden.

Zwischen der Innenseite des Deckels 38 des Innenelementes 12 des Aufnahmeteils 21 kann eine umlaufende Dichtung 39 vorgesehen sein. Für einen dichtenden Abschluß ist diese jedoch nicht unbedingt erforderlich, da durch die Axialspannmittel ebenfalls eine abdichtende Wirkung des Deckels 38 an dem Aufnahmeteil 21 erzielt werden kann.

Die Zentrierung bzw. radiale Führung der Verbindungseinrichtung 11 kann durch eine profilierte, z.B. konische, Innenseite des Deckels 38 erfolgen, die die Verbindungseinrichtung 11 während des Schließvorganges zu dem Aufnahmeteil 21 hin festlegt. Die Profilierung kann auch in Form von Schrägen ausgebildet sein, die in die Öffnung des Aufnahmeteils 21 eingreifen oder an dessen Außenseite angreifen können.

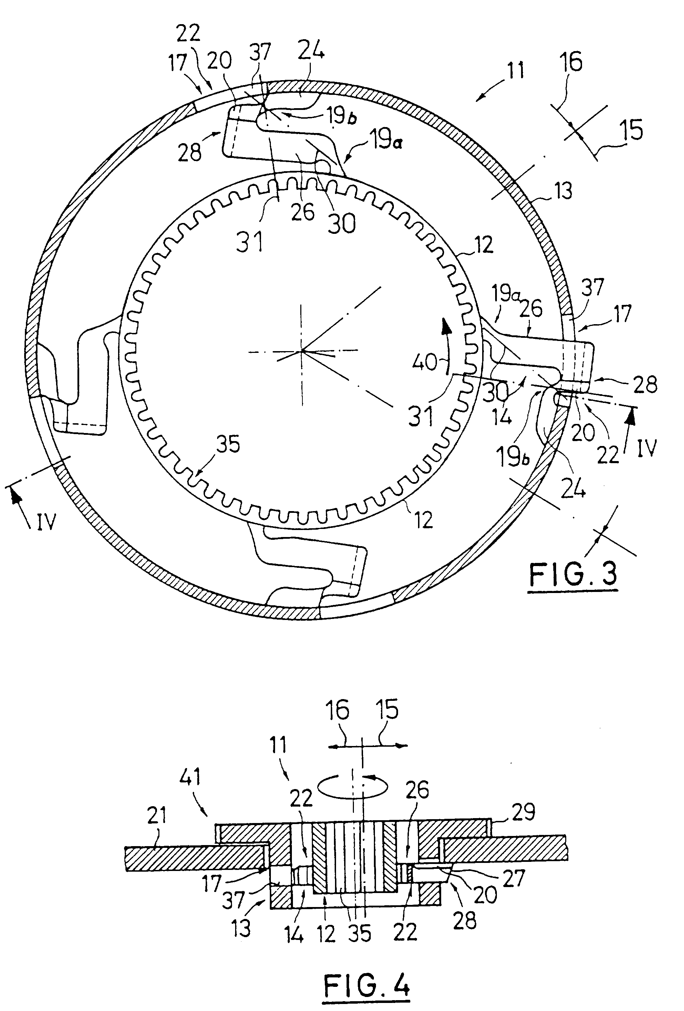

Fig. 3 zeigt eine Variante der Verbindungseinrichtung 11 in Fig. 1. Dabei sind die Betätigungsglieder 14 ebenfalls gleichartig ausgebildet und gleichlaufend in Offenstellung in Umfangsrichtung, jedoch in umgekehrter Lage zwischen Innen- und Außenelement 12, 13 angeordnet, wobei die Betätigungsglieder 14 bei einer Relativdrehung des Innen- und Außenelementes 12, 13 nach außen in eine radial nach außen weisende Position der Schließstellung 15 bewegt werden. Dabei stützen sich die Betätigungsglieder 14 an der Stützfläche 37 ab, die an Ausnehmungen 17 in dem Außenring 13 vorgesehen sind. Dieser kann ebenfalls mit Verdrehsicherungselementen ausgestaltet sein. Das Innenelement 12 ist als zylindrischer Hohlkörper ausgebildet, der an seiner Innenseite Drehhilfen 35 aufweist, damit ein Werkzeug darin eingreifen kann, um die Verbindungseinrichtung 11 zu ver- bzw. zu entriegeln, wobei keines der beiden Elemente 12, 13 drehfest angeordnet zu sein braucht.

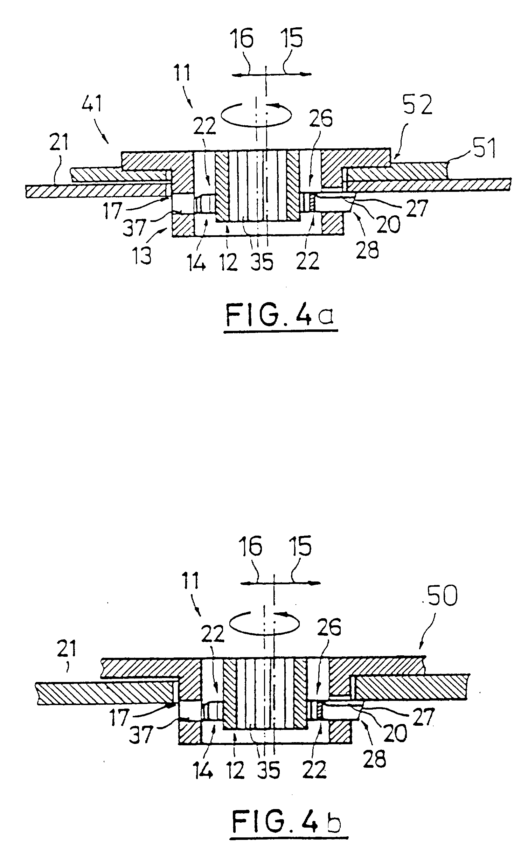

In Fig. 4 ist ein Schnitt entlang der Linie IV-IV dargestellt, bei welchem die Verbindungseinrichtung 11 in einer Öffnungsstellung 16 zum Einsetzen der Verbindungseinrichtung 11 und in einer Schließstellung 15 angeordnet ist. Das Außenelement 13 weist an seinem oberen Ende eine umlaufende Schulter 41 auf, an der die Verbindungseinrichtung 11 im eingesetzten Zustand an dem Aufnahmeteil 21 anliegt. Zusätzlich können ebenfalls an der umlaufenden Ringschulter 41 Griffmulden 29 vorgesehen sein, die bei der vorliegenden Ausführungsform zum drehfesten Festhalten des Außenringes 13 dienen können. Durch die Festlegung eines der Elemente 12, 13 oder einer Relativbewegung der Elemente 12, 13 erfolgt die Verriegelung durch die Auslenkung der Betätigungsglieder 14 nach außen. In der Schließstellung 15 ist das Betätigungsglied 14 durch die Ausnehmung 17 hindurchgeführt. Die Ringschulter 41 und der Nockenabschnitt 28 des Betätigungsgliedes 14 überdecken bzw. untergreifen den Innenrand des Aufnahmeteils 21, wobei die Betätigungsglieder 14 durch die Stützflächen 37 in ihrer Position gehalten werden und somit die Verbindungseinrichtung 11 in der Ausnehmung des Aufnahmeteils 21 festlegen.

Die Verbindungseinrichtung 11 kann insbesondere als Tankdeckel eingesetzt werden, wobei das Innenelement 12 mit einem Zylinderschloß versehen sein kann, um Sicherheitsbestimmungen gerecht zu werden. Des weiteren kann diese Verbindungseinrichtung 11 als Befestigungselement für Abdeckungen o.dgl. eingesetzt werden, die beispielsweise des öfteren demontiert werden müssen, um eine gute Zugänglichkeit gewährleisten zu können.

Die Nockenabschnitte 28 beschreiben in der Schließstellung 15 der Betätigungsglieder 14 einen Kreis mit größerem Durchmesser als der zylindrisch nach unten ragende Teil des Außenelementes 13. Dadurch kann eine Sicherung der Verbindungseinrichtung 11 in der Ausnehmung 17 erfolgen.

Fig. 4a zeigt eine Schnittdarstellung einer Variante der Verbindungseinrichtung 11 aus Fig. 3 und 4 in einer Öffnungs- und Schließstellung 15, 16. Diese Verbindungseinrichtung 11 ist dabei als Halteclip ausgebildet, der zwei oder mehrere Bauteile 51 zueinander festlegt. Dies kann insbesondere bei der Befestigung von Abdeckungen, Konsolen o.dgl. Anwendung finden. Dabei kann an dem zu befestigenden Bauteil 51 zur Aufnahme der Verbindungseinrichtung 11 eine Vertiefung 52 vorgesehen sein, die die Verbindungseinrichtung verdrehsicher festlegt. Bei dickeren Bauteilen 51 kann die Vertiefung 52 die Verbindungseinrichtung 11 vollständig aufnehmen, so daß eine plane Oberfläche des Bauteils 51 bestehen bleibt. Die Verbindungseinrichtung 11 entspricht der in Fig. 3 und 4 beschriebenen.

Fig. 4b zeigt eine Schnittdarstellung einer weiteren Variante der Verbindungseinrichtung 11 aus Fig. 3 und 4 in einer Öffnungs- und Schließstellung 15, 16. Die Verbindungseinrichtung 11 ist einstückig mit dem zu befestigenden Teil 50 ausgebildet. Die Schulter des Außenelementes geht direkt in das Teil 50 über. Durch Einsetzen eines Werkzeugs in das Innenelement 12 kann das Teil 50 an dem Aufnahmeteil 21 lösbar befestigt werden. Ebenso ist eine Schnellmontage des Teils 50 durch Einschnappen der in Schließstellung 15 angeordneten Verbindungseinrichtung 11 möglich.

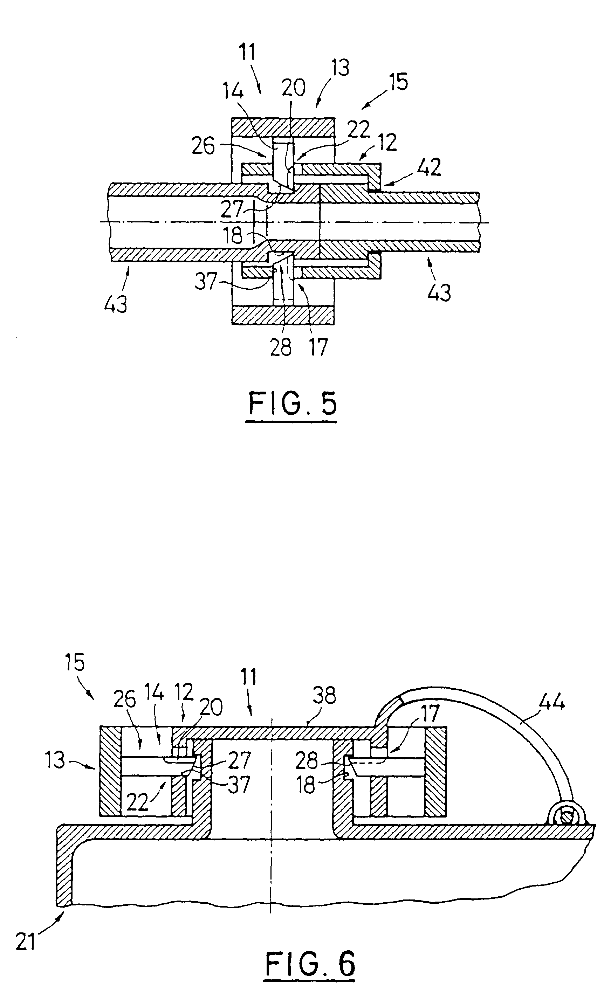

Fig. 5 zeigt eine weitere Variante der Verbindungseinrichtung 11, welche Schlauch- bzw. Leitungsteile 43 miteinander verbindet. Dabei ist das Innenelement 12 als Überwurfmuffe ausgebildet und weist eine nach innen gerichtete Ringschulter 42 auf, die an einem Absatz eines zu verbindenden Leitungsendes vorgesehen ist. Die in der Schließstellung 15 nach innen weisenden Betätigungsglieder 14 greifen in die an dem zweiten Rohrleitungsende vorgesehene Ausnehmung 18 ein und verspannen die beiden Rohrleitungsenden 43 axial fluchtend miteinander. Das Innenelement 12 kann vorteilhafterweise in seinem Innendurchmesser den äußeren Abmessungen der Leitungsenden entsprechen. Somit können die beiden Leitungsenden in dem Innenelement 12 geführt werden, wodurch eine stabile und sichere Verbindung geschaffen werden kann.

In Fig. 6 ist eine Variante der Verbindungseinrichtung 11 nach Fig. 1 dargestellt, wobei die Positionierung des Innenelementes 12 zu dem Behälter 21, beispielsweise ein Scheibenwaschwasserbehälter, durch eine direkt an dem Innenelement 12 und an dem Behälter 21 angebrachte Verliersicherung 44 in Form einer Lasche erfolgen kann. Bei dieser Ausführungsform können die Verdrehsicherungselemente 35 von Fig. 1 entfallen, und die Verliersicherung 44 kann bei entsprechend stabiler Ausführung auch die Drehsicherung übernehmen. Der Verriegelungsmechanismus der Verbindungseinrichtung 11 ist zu dem in Fig. 1 analog. Durch diese direkt angespritzte bzw. angeklebte Lasche können die sonst üblichen und extra zu montierenden Sicherungsketten für Verschlüsse entfallen.

Die Verbindungseinrichtung arbeitet nach folgendem Prinzip: Die in Fig. 1 dargestellte Verbindungseinrichtung 11, die als Verschluß ausgebildet ist, weist einen Verschließmechanismus aus zwei Schritten bestehend auf. Der erste Schritt besteht aus einer axialen Aufsetzbewegung des Verschlusses 11 auf das Aufnahmeteil 21. Dabei greifen Verdrehsicherungselemente 35 in Gegenelemente 36 ein. Bei dem nachfolgenden Schritt erfolgt eine Verdrehung des Außenelementes 13 um die Aufsetzachse, wobei das Innenelement 12 durch die Verdrehsicherungselemente 35 drehfest zu dem Aufnahmeteil 21 gehalten wird. Die Betätigungsglieder 14 werden dabei aus ihrer Anordnung in der Öffnungsstellung 16 ausgelenkt, um in einer Schließstellung 15 radial nach innen zu weisen. Der Öffnungsmechanismus erfolgt in umgekehrter Reihenfolge wie der Schließmechanismus.

Während des Schließvorganges und des Öffnungsvorganges erfährt das Betätigungsglied 14 eine Schwenkbewegung, die mit einer radialen Verschiebung des Nockenabschnittes 28 kombiniert ist. Diese Bewegung findet statt durch Schwenken der Verbindungslinie 30 zwischen den Scharnieren 19a und 19b um das Gelenk des Scharniers 19b des drehgesicherten Elementes, hier des Innenelementes 12, aus einer Endlage über den Totpunkt hinaus in die andere Endlage, wobei die Endlagen der Öffnungs- bzw. Schließstellung 16, 15 entsprechen. Während der Verdrehung des Außenelementes 13 aus der Öffnungsstellung in Pfeilrichtung 40 bis in die Totpunktstellung, die in einer radialen Achse 31 durch die Scharniere 19a und 19b liegt, erfolgt eine Zunahme der Drehkraft sowie eine elastische Ausbauchung des Außenelementes 13. Dies wird durch den größeren Abstand entlang der Achse 30 zwischen den Drehpunkten 19a, 19b gegenüber dem Abstand zwischen Innen- und Außenelement 12, 13 entlang der Achse 31 bewirkt. Dadurch kann auch die aufzubringende Kraft festgelegt werden, um die Verbindungseinrichtung 11 aus und in die Endlagen zu bringen. Durch die elastische Ausbildung des Außenelementes 13 kann die Totpunktstellung gegen Rückstellkräfte überwunden werden. Nach dem Auslenken über die Achse 31 erfolgt die elastische Rückfederung des Außenelementes 13 in die Schließstellung, wodurch ein Schub der Betätigungsglieder 14 zum Einschnappen in eine Aufnahme 18 des Aufnahmeteils 21 durch die freiwerdende Nutzkraft bewirkt wird. Diese Rückfederung bewirkt gleichzeitig ein Halten der Betätigungsglieder 14 in der Schließstellung 15, die radial nach innen weisen und den Innen- gegen den Außenring verstemmen, wodurch die jeweiligen Endstellungen selbsthaltend sind. Für die Öffnungsstellung 16 gilt entsprechendes.

Durch eine Verdrehung des Betätigungsgliedes 14 um das Scharnier 19b wird ein relativ großer Schwenkwinkel bzw. Schwenkweg erzielt, der durch die Anordnung der Verbindungslinie 30 zu der Achse 31 in der Öffnungs- und Schließstellung verdeutlicht wird. Dies bietet eine Sicherheit des Verschlusses 11 in einer der selbsthaltenden Endstellungen 15, 16, die durch teilweise ungewollte oder geringfügige Verdrehung nicht gelöst werden kann. Des weiteren kann die aus der Rückfederung frei werdende Nutzkraft während des Einschwenkvorganges über die Betätigungsglieder in eine axiale Spannkraft umgesetzt werden.

Während des Einschwenkvorganges greifen die Betätigungsglieder 14 mit ihren Nockenabschnitten 28 durch Ausnehmungen 17 hindurch, wobei die Unterseite des Stützabschnittes 26 an der Stützfläche 37 der Ausnehmung 17 aufliegt und geführt wird. Der Nockenabschnitt 28 greift dabei mit der Spannschräge 20 an der Aufnahme 18 des Aufnahmeteils 21 an und zieht die Verbindungseinrichtung 11 in axialer Richtung gegen das Aufnahmeteil 21. Die Betätigungsglieder 14 sind durch die Stützflächen 37 geführt, damit während des Schließvorganges das Innenelement 12 gegen das Aufnahmeteil 21 axial verspannt werden kann.

Durch die Ausbildung der Axialspannmittel 22 in ihrer Größe und Winkligkeit kann der Grad der axialen Verspannung zwischen der Verbindungseinrichtung 11 und dem Aufnahmeteil 21 bestimmt werden. Es können dabei Spannschrägen 20 an dem Nockenabschnitt 28 und/oder Schrägen an der Aufnahme 18 vorgesehen sein. Bevorzugt in der Schließstellung 15 ist eine Verriegelung durch planparallele Flächen sich hintergreifender Verriegelungselemente, wobei diese Flächen insbesondere senkrecht zur axialen Richtung stehen, so daß bei axialer Belastung eine radiale Rückstellkraft vermieden wird. Dies ist durch die Kombination der bei der Schließbewegung der Betätigungsglieder 14 zunächst an der Hinterschneidung am Aufnahmeteil 21 zum Eingriff kommender Spannschräge 20 mit der bei der Dreh- bzw. Schwenkbewegung der Betätigungsglieder 14 anschließend zum Eingriff kommenden ebenen Oberfläche der Betätigungsglieder 14 bzw. deren Nockenabschnitte 28 gegeben.

Bei der Verwendung einer Dichtung 39 zwischen Aufnahmeteil 21 und Innenelement 12 ist es vorteilhaft, die Spannschräge 20 möglichst groß auszubilden, um gleichzeitig über den großen Schwenkweg des Betätigungsgliedes 14 eine ausreichende Verspannung des Verschlußteiles 11 mit dem Aufnahmeteil 21 zu ermöglichen und eine dichte Verbindung zu schaffen.

Das Scharnier 19b ist frei von einer Belastung durch axiale Kräfte. Die in der Schließstellung 15 wirkenden axialen Kräfte werden zwischen der Stützfläche 37 und der gegenüberliegenden Unterseite des Nockenabschnittes 28 sowie zwischen der Oberseite des Nockenabschnittes 28 und der Aufnahme 18 des Aufnahmeteils 21 aufgefangen. Dadurch haben die Filmscharniere, die somit frei von Scherkräften sind, eine hohe Lebensdauer.

Die erfindungsgemäße Verbindungseinrichtung 11 kann ebenfalls als eine lösbare Schnappverbindung eingesetzt werden. Der Verschluß 11 wird in die Schließstellung 15 übergeführt und in axialer Richtung auf das Aufnahmeteil 21 aufgedrückt. Durch die stirnseitig an den Nockenabschnitten 28 angeordneten Einführschrägen 27 werden die Betätigungsglieder 14 radial nach außen ausgelenkt, wodurch der lichte Durchmesser der Betätigungsglieder 14 aufgeweitet wird. Durch die elastische Ausbildung des Außenelementes 13, kann dieses eine unrunde Verformung annehmen. In der axialen Endstellung des Verschlusses 11 auf dem Aufnahmeteil 21 können durch die Rückfederkräfte des Außenelementes 13 die Nockenabschnitte 28 in die Aufnahme 18 einschnappen und darin gehalten werden. Zur Erleichterung des Einschnappens können an der Oberseite des Nocken abschnittes 28 Schrägen vorgesehen sein, die zusätzlich die nach innen wirkende Nutzkraft zum Einschnappen der Nockenabschnitte 28 in der Aufnahme 18 in eine axiale Spannung umsetzen.

Die Verbindungseinrichtung 11 in den Fig. 3, 4, 4a und 4b, die auch als Halteclip zum Befestigen eines Bauteils an einem anderen eingesetzt werden kann, arbeitet analog des Verschlusses 11 aus Fig. 1 und 2. Hierbei sind lediglich die Betätigungsglieder 14 in umgekehrter Lage zwischen dem Innen- und Außenelement 12, 13 angeordnet. Dies hat zur Folge, daß bei einem Schließvorgang 15 die Betätigungsglieder 14 nach außen ausgelenkt werden und in der Schließstellung 15 radial nach außen weisen und durch Ausnehmungen 17 des Außenelementes 13 hindurchgeführt sind. Im Gegensatz zu dem Verschluß 11 aus Fig. 1 und 2 ist hier vorteilhafterweise das Innenelement 12 elastischer als das Außenelement 13 ausgebildet, um eine für die Auslenkung erforderliche Verformung aufnehmen zu können.

Ferner ist im Gegensatz zu dem Verschluß 11 aus Fig. 1 und 2 das Innenelement 12 zylindrisch ausgebildet und weist an seiner Innenfläche Verdrehhilfen 29 auf, in die ein Werkzeug eingesetzt werden kann. Dieser Halteclip 11 wird axial in das Aufnahmeteil 21 eingesetzt und in dieser Position gehalten. Durch eine Drehung des in das Innenelement 12 eingesetzten Werkzeuges in Pfeilrichtung 40 erfolgt eine Auslenkung der Betätigungsglieder 14 in die Schließstellung 15. Bei dem Öffnungs- oder Schließvorgang 16, 15 ist ein drehfestes Anordnen eines der beiden Elemente 12, 13 nicht erforderlich. Diese können relativ zueinander verdreht werden, um in eine der beiden Endstellungen übergeführt werden zu können.

Diese Variante der Verbindungseinrichtung 11 kann ebenfalls als lösbare Schnappverbindung analog dem Verschluß 11 eingesetzt werden.

Die in Fig. 5 dargestellte Leitungsverbindung arbeitet analog dem Verschluß 11 in Fig. 1 und 2. Das zylindrisch ausgebildete Innenelement 12 mit einer nach innen weisenden Ringschulter 42 kann dabei an der Außenseite der Mantelfläche des Innenelementes 12 mit Verdrehsicherungshilfenhilfen ausgebildet sein oder aber die Ringschulter 42 ist mit derartigen Mitteln versehen. Somit kann die drehfeste Anordnung des Innenelementes 12 bei dem Verschluß 11 gewährleistet werden. Der Öffnungs- und Schließmechanismus sowie die dadurch auftretenten Kräfte sind analog den in Fig. 1 und 2 beschriebenen.

Der in Fig. 6 dargestellte Verschluß 11 ist analog dem in Fig. 1 und 2. Dieser ist durch eine Verliersicherung 44, die direkt an dem Innen- oder Außenelement 12, 13 angeordnet sein kann, ausgebildet. Die Anbindung der Verliersicherung 44 an dem Verschluß 11, kann an dem Außenelement 13 ohne Drehpunkt erfolgen, da der Verdrehwinkel für den Schließ- und Öffnungsvorgang gering gehalten ist, wobei vorzugsweise die Anbindung an dem Innenelement 12 vorgesehen ist, da dieses drehfest mit dem Aufnahmeteil verbunden ist.

Die Erfindung ist nicht auf die beschriebenen Ausführungsformen beschränkt. Vielmehr sind Abwandlungen davon möglich, ohne daß der Rahmen der Erfindung verlassen wird. Es ist zwar normalerweise vorgesehen, daß das Aufnahmeteil und das damit zusammenwirkende drehgesicherte Element der Verbindungseinrichtung im wesentlichen zylindrische Form haben. Dies ist jedoch nicht erforderlich, da zwischen dem drehgesicherten Element und dem Aufnahmeteil während des Schließens und Öffnens eine relative Verdrehung nicht stattfindet. So können das Aufnahmeteil und das drehgesicherte Element auch unrunde Querschnittsformen aufweisen, beispielsweise im Querschnitt oval, eiförmig oder eckig sein. Dies kann besonders bei Flüssigkeitsbehältern von Vorteil sein, deren Ausgußöffnung mit einer Ausgußschnauze versehen ist. Hierbei kann die Schließbewegung auch zweckmäßigerweise durch eine Verschiebebewegung parallel zur Verbindungsebene erfolgen.

## Patentansprüche

1. Verbindungseinrichtung (11) mit einem Aufnahmeteil (21), das mindestens eine Hinterschneidung (18) aufweist, wobei die Verbindungseinrichtung zum lösbaren Angreifen an und Verbinden mit dem Aufnahmeteil (21) ausgebildet ist, insbesondere zum Verschließen von Behältern, zum Verbinden von Teilen wie Schlauch- bzw. Leitungsteilen, zum Befestigen von Abdeckungen o.dgl., und wobei die Verbindungseinrichtung (11) zwei relativ zueinander bewegliche Elemente (12, 13) aufweist, die über ein oder mehrere, einen Nockenabschnitt (28) aufweisende Betätigungsglieder (14) gelenkig verbunden sind, die parallel zu einer Verbindungsebene schwenkend zum Hintergreifen der Hinterschneidung (18) in Richtung auf das Aufnahmeteil (21) bewegbar sind und zwischen einer Öffnungsstellung (16) und einer Schließstellung (15) eine Totpunktstellung überwinden, dadurch gekennzeichnet, daß die Verbindungseinrichtung (11) und das Aufnahmeteil (21) miteinander senkrecht zur Verbindungsebene zusammenwirkende Spannmittel (22) aufweisen und hierzu an dem Nockenabschnitt (28) der Betätigungsglieder (14) und/oder am Aufnahmeteil (21) Spannschrägen (20) vorgesehen sind.

2. Verbindungseinrichtung (11) zum lösbaren Angreifen an und Verbinden mit einem Aufnahmeteil (21), das mindestens eine Hinterschneidung (18) aufweist, insbesondere zum Verschließen von Behältern, zum Verbinden von Teilen wie Schlauch- bzw. Leitungsteilen, zum Befestigen von Abdeckungen o.dgl., mit zwei relativ zueinander beweglichen Elementen (12, 13), die über ein oder mehrere, einen Nockenabschnitt (28) aufweisende Betätigungsglieder (14) gelenkig verbunden sind, die parallel zu einer Verbindungsebene schwenkend zum Hintergreifen der Hinterschneidung (18) in Richtung auf das Aufnahmeteil (21) bewegbar sind und zwischen einer Öffnungsstellung (16) und einer Schließstellung (15) eine Totpunktstellung überwinden, dadurch gekennzeichnet, daß die Verbindungseinrichtung (11) mit der Hinterschneidung (18) des Aufnahmeteils (21) senkrecht zur Verbindungsebene zusammenwirkende Spannmittel (22) aufweist und hierzu an dem Nockenabschnitt (28) der Betätigungsglieder (14) Spannschrägen (20) vorgesehen sind.

3. Verbindungseinrichtung nach Anspruch 1 oder 2, dadurch gekennzeichnet, daß eines der Elemente (12, 13) drehgesichert mit dem Aufnahmeteil (21) verbindbar ist, insbesondere durch ineinander eingreifende Verdrehsicherungselemente (35).

4. Verbindungseinrichtung nach einem der vorhergehenden Ansprüche, dadurch gekennzeichnet, daß das mindestens eine Betätigungsglied (14) im wesentlichen radial schwenkend bewegbar ist.

5. Verbindungseinrichtung nach einem der vorhergehenden Ansprüche, dadurch gekennzeichnet, daß der Nockenabschnitt (28) durch das bewegbare Element (12 oder 13) in Schließstellung (15) radial abgestützt ist.

6. Verbindungseinrichtung nach einem der vorhergehenden Ansprüche, dadurch gekennzeichnet, daß die Verbindungseinrichtung (11) mindestens zwei bis zehn, vorzugsweise vier bis sechs Betätigungsglieder (14) aufweist.

7. Verbindungseinrichtung nach einem der vorhergehenden Ansprüche, dadurch gekennzeichnet, daß die Betätigungsglieder (14) zwischen den als Innen- und Außenelement einander umgreifenden Elementen (12, 13) angeordnet sind.

8. Verbindungseinrichtung nach einem der vorhergehenden Ansprüche, dadurch gekennzeichnet, daß sich der Nockenabschnitt (28) der Betätigungsglieder (14) an einen massiven Stützabschnitt (26) anschließt, daß am Nockenabschnitt (28) und Stützabschnitt (26) jeweils anschließend ein Gelenkabschnitt (19), vorzugsweise ein Filmscharnier, vorgesehen ist und daß insbesondere der Nockenabschnitt (28) und der Stützabschnitt (26) winkelförmig zueinander angeordnet sind.

9. Verbindungseinrichtung nach einem der Ansprüche 7 oder 8, dadurch gekennzeichnet, daß die Betätigungsglieder (14) radial nach innen oder außen auslenkbar sind, wobei in der Schließstellung (15) der lichte Durchmesser der ausgelenkten Betätigungsglieder (14) kleiner bzw. größer als der des Innen- bzw. Außenelementes (12, 13) vorgesehen ist.

10. Verbindungseinrichtung nach einem der Ansprüche 7 bis 9, dadurch gekennzeichnet, daß der Nockenabschnitt (28) in geschlossenem Zustand (15) der Verbindungseinrichtung (11) nach innen oder außen über das Innen- bzw. Außenelement (12, 13) hinausragt, insbesondere durch das Innen- bzw. Außenelement (12, 13) hindurchragt.

11. Verbindungseinrichtung nach einem der vorhergehenden Ansprüche, dadurch gekennzeichnet, daß die Betätigungsglieder (14) in Schließstellung (15) wenigstens an einer Stützfläche (37), vorzugsweise an einer in axialer Richtung abstützenden Fläche, abstützbar sind.

12. Verbindungseinrichtung nach Anspruch 11, dadurch gekennzeichnet, daß die Stützfläche (37) Teil einer in dem Innen- bzw. Außenelement (12, 13) vorgesehenen Ausnehmung (17) ist, durch die die nach außen bzw. nach innen auslenkbaren Betätigungsglieder (14) zum Eingriff mit dem Aufnahmeteil (21) hindurchführbar sind.

13. Verbindungseinrichtung nach einem der vorhergehenden Ansprüche, dadurch gekennzeichnet, daß die Betätigungsglieder (14) radial federnd ausgebildet und/oder gelagert sind, insbesondere die Betätigungsglieder (14) aus elastischem Material gefertigt und im wesentlichen S-förmig ausgebildet sind und/oder das dem Nockenelement (28) entfernte Element (12 bzw. 13) federnd nachgiebig ausgebildet ist.

14. Verbindungseinrichtung nach einem der vorhergehenden Ansprüche, dadurch gekennzeichnet, daß die Nockenabschnitte (28) Einführschrägen (27) zur Herstellung der Verbindung in Schließstellung (15) der Betätigungsglieder (14) aufweisen.

15. Verbindungseinrichtung nach einem der vorhergehenden Ansprüche, dadurch gekennzeichnet, daß das Innen-, das Außenelement (12, 13) und die Betätigungsglieder (14) einstückig und aus Kunststoff ausgebildet sind.

16. Verbindungseinrichtung nach einem der vorhergehenden Ansprüche, dadurch gekennzeichnet, daß die Verbindungseinrichtung (11) und das Aufnahmeteil (21) zur Bildung einer Verliersicherung (44) und/oder einer Verdrehsicherung miteinander verbunden sind.

17. Verbindungseinrichtung nach einem der vorhergehenden Ansprüche, dadurch gekennzeichnet, daß an der Verbindungseinrichtung (11) eine Sicherung gegen versehentliches Betätigen, insbesondere eine Kindersicherung, vorgesehen ist.

18. Verbindungseinrichtung nach einem der vorhergehenden Ansprüche, dadurch gekennzeichnet, daß an der Verbindungseinrichtung (11) eine Originalitätssicherung anbringbar ist, insbesondere durch eine aufbrechbare Verbindung zwischen den Elementen (12, 13).

19. Verbindungseinrichtung nach einem der vorhergehenden Ansprüche, dadurch gekennzeichnet, daß die als Verschluß von Behältern o.dgl. vorgesehene Verbindungseinrichtung (11) ein deckelartig ausgebildetes Innenelement (12) aufweist, an dessen innerer Deckelfläche (38) eine Dichtung (39) anbringbar ist.

20. Verbindungseinrichtung nach einem der vorhergehenden Ansprüche, dadurch gekennzeichnet, daß die Verbindungseinrichtung (11) mit einem Aufnahmeteil (21) verbunden ist.

## Claims

1. Connecting device (11) with a reception part (21), which has at least one undercut (18), the connecting device being constructed for detachable engagement and connection with the reception part (21), particularly for closing containers, connecting parts such as hose or line parts, fixing covers, etc. and in which the connecting device (11) has two elements (12, 13) movable relative to one another and interconnected in articulated manner by means of one or more operating members (14) having a cam section (28) and which are movable parallel to a connecting plane in pivoting manner for engaging behind the undercut (18) in the direction of the reception part (21) and between an open position (16) and a closed position (15) overcome a dead centre position, characterized in that the connecting device (11) and reception part (21) are provided with clamping means (22) cooperating at right angles to the connecting plane and for this purpose on the cam section (28) of the operating members (14) and/or on the reception part (21) are provided clamping bevels (20).

2. Connecting device (11) for the detachable engagement on and connection with a reception part (21) having at least one undercut (18), particularly for closing containers, connecting parts such as hose or line parts, fixing covers, etc., having two elements (12, 13) movable relative to one another and which are connected in articulated manner by means of one or more operating members (14) having a cam section (28) and which can be moved parallel to a connecting plane in pivoting manner for engaging behind the undercut (18) in the direction of the reception part (21) and between an open position (16) and a closed position (15) overcome a dead centre position, characterized in that the connecting device (11) with the undercut (18) of the reception part (21), perpendicular to the connecting plane has cooperating clamping means (22) and for this purpose on the cam section (28) of the operating members (14) clamping bevels (20) are provided.

3. Connecting device according to claim 1 or 2, characterized in that one of the elements (12, 13) can be connected to the reception part (21) so that it does not rotate, particularly by interengaging rotation preventing elements (35).

4. Connecting device according to one of the preceding claims, characterized in that at least one operating member (14) is movable in a substantially radially pivoting manner.

5. Connecting device according to one of the preceding claims, characterized in that the cam section (28) is radially supported in the closed position (15) by the movable element (12 or 13).

6. Connecting device according to one of the preceding claims, characterized in that the connecting device (11) has at least two to ten, preferably four to six operating members (14).

7. Connecting device according to one of the preceding claims, characterized in that the operating members (14) are positioned between the elements (12, 13) engaging round one another as the inner and outer element.

8. Connecting device according to one of the preceding claims, characterized in that the cam section (28) of the operating members (14) is connected to a solid support section (26), that on the cam section (28) and the support section (26) is provided in connecting manner an articulation section (19), preferably a film hinge and that in particular the cam section (28) and the support section (26) are arranged in angular manner to one another.

9. Connecting device according to one of the claims 7 or 8, characterized in that the operating members (14) can be deflected radially inwards or outwards and in the closed position (15) the internal diameter of the deflected operating members (14) is smaller or larger than that of the inner or outer element (12, 13).

10. Connecting device according to one of the claims 7 to 9, characterized in that the cam section (28) in the closed state (15) of the connecting device (11) projects inwards or outwards over the inner or outer element (12, 13) and in particular projects through the inner or outer element (12, 13).

11. Connecting device according to one of the preceding claims, characterized in that the operating members (14) are supported in the closed position (15) on at least one support face (37), preferably on a face supporting in the axial direction.

12. Connecting device according to claim 11, characterized in that the support face (37) is part of a recess (17) provided in the inner or outer element (12, 13) and through which can be passed the outwardly or inwardly deflectable operating members (14) for engagement with the reception part (21).

13. Connecting device according to one of the preceding claims, characterized in that the operating members (14) are constructed and/or mounted in radially resilient manner, in particular the operating members (14) are made from elastic material and have a substantially S-shaped construction and/or the element (12 or 13) remote from the cam element (28) has a resilient flexible construction.

14. Connecting device according to one of the preceding claims, characterized in that the cam sections (28) have insertion bevels (27) for producing the connection in the closed position (15) of the operating members (14).

15. Connecting device according to one of the preceding claims, characterized in that the inner element (12), outer element (13) and operating members (14) are in one piece and made from plastic.

16. Connecting device according to one of the preceding claims, characterized in that the connecting device (11) and reception part (21) are interconnected for forming a loss preventing means (44) and/or a rotation preventing means.

17. Connecting device according to one of the preceding claims, characterized in that on the connecting device (11) is prevented an accidental operation preventing means, particularly for children.

18. Connecting device according to one of the preceding claims, characterized in that on the connecting device (11) is fitted an originality securing means, particularly by a break openable connection between the elements (12, 13).

19. Connecting device according to one of the preceding claims, characterized in that the connecting device (11) provided as a closure for containers and the like has a lid-like inner element (12), on whose inner cover face (38) can be fitted a seal (39).

20. Connecting device according to one of the preceding claims, characterized in that the connecting device (11) is connected to a reception part (21).

## Revendications

1. Dispositif d'assemblage (11) avec une partie réceptrice (21) qui présente au moins une contre-dépouille (18), le dispositif d'assemblage étant agencé pour attaquer la partie réceptrice (21) de façon détachable et pour être relié à elle et servant en particulier à la fermeture de récipients, à la liaison de pièces, telles que des parties de tuyaux souples ou de canalisations, ainsi qu'à la fixation de recouvrements ou analogues, et le dispositif d'assemblage (11) comprenant deux éléments (12, 13) mobiles l'un par rapport à l'autre et reliés entre eux de façon articulée par l'intermédiaire d'un ou plusieurs organes d'actionnement (14) présentant une portion de came ou d'attaque (28) et déplaçables par pivotement, parallèlement à un plan d'assemblage, en direction de la partie réceptrice (21), pour venir s'accrocher derrière la contre-dépouille (18), organes qui dépassent à l'encontre d'une résistance une position de point mort entre une position ouverte (16) et une position fermée (15), caractérisé en ce que le dispositif d'assemblage (11) et la partie réceptrice (21) comportent des moyens de serrage (22) qui coopèrent entre eux perpendiculairement au plan d'assemblage, et des biseaux de serrage (20) sont prévus dans ce but sur la partie d'attaque (28) des organes d'actionnement (14) et/ou sur la partie réceptrice (21).

2. Dispositif d'assemblage (11) conçu pour attaquer une partie réceptrice (21) de façon détachable et être relié à cette partie, laquelle présente au moins une contre-dépouille (18), dispositif qui sert en particulier à la fermeture de récipients, à l'assemblage de pièces, telles que des parties de tuyaux souples ou de canalisations, à la fixation de recouvrements ou analogues, et qui comprend deux éléments (12, 13) mobiles l'un par rapport à l'autre et reliés entre eux de façon articulée par l'intermédiaire d'un ou plusieurs organes d'actionnement (14) présentant une portion de came ou d'attaque (28) et déplaçables par pivotement, parallèlement à un plan d'assemblage, en direction de la partie réceptrice (21), pour venir s'accrocher derrière la contre-dépouille (18), organes qui dépassent à l'encontre d'une résistance une position de point mort entre une position ouverte (16) et une position fermée (15), caractérisé en ce que le dispositif d'assemblage (11) comporte des moyens de serrage (22) coopérant perpendiculairement au plan d'assemblage avec la contre-dépouille (18) de la partie réceptrice (21), et des biseaux de serrage (20) sont prévus dans ce but sur la portion d'attaque (28) des organes d'actionnement (14).

3. Dispositif d'assemblage selon la revendication 1 ou 2, caractérisé en ce que l'un des éléments (12, 13) peut être solidarisé en rotation avec la partie réceptrice (21), en particulier par des éléments d'immobilisation en rotation (35) s'imbriquant les uns dans les autres.

4. Dispositif d'assemblage selon une des revendications précédentes, caractérisé en ce que l'organe d'actionnement (14) est mobile par pivotement dans une direction essentiellement radiale.

5. Dispositif d'assemblage selon une des revendications précédentes, caractérisé en ce que la portion d'attaque (28) est appuyée radialement, à la position fermée (15), par l'élément déplaçable (12 ou 13).

6. Dispositif d'assemblage selon une des revendications précédentes, caractérisé en ce que le dispositif d'assemblage (11) comporte au moins deux à dix, de préférence quatre à six organes d'actionnement (14).

7. Dispositif d'assemblage selon une des revendications précédentes, caractérisé en ce que les organes d'actionnement (14) sont placés entre les éléments (12, 13) dont l'un forme un élément intérieur et l'autre un élément extérieur entourant le premier.

8. Dispositif d'assemblage selon une des revendications précédentes, caractérisé en ce que la portion d'attaque (28) des organes d'actionnement (14) se raccorde à une portion d'appui (26) massive, qu'une portion d'articulation (19), de préférence sous la forme d'une charnière constituée par une couche de matière, est prévue sur la portion d'attaque (28) et la portion d'appui (26), en raccordement avec chaque portion, et que, en particulier, la portion d'attaque (28) et la portion d'appui (26) sont disposées sous un angle l'une par rapport à l'autre.

9. Dispositif d'assemblage selon la revendication 7 ou 8, caractérisé en ce que les organes d'actionnement (14) peuvent être déviés radialement vers l'intérieur ou vers l'extérieur, l'agencement étant tel que, à la position fermée (15), le diamètre intérieur des organes d'actionnement (14) déviés est plus petit que celui de l'élément intérieur (12) ou plus grand que celui de l'élément extérieur (13).

10. Dispositif d'assemblage selon une des revendications 7 à 9, caractérisé en ce que, à l'état fermé (15) du dispositif d'assemblage (11), la portion d'attaque (28) dépasse vers l'intérieur de l'élément intérieur (12) ou dépasse vers l'extérieur de l'élément extérieur (13), en particulier en passant à travers l'élément intérieur ou extérieur (12, 13) respectivement.

11. Dispositif d'assemblage selon une des revendications précédentes, caractérisé en ce que, en position fermée (15), les organes d'actionnement (14) peuvent s'appuyer sur au moins une face d'appui (37), de préférence sur une face procurant un appui en direction axiale.

12. Dispositif d'assemblage selon la revendication 11, caractérisé en ce que la face d'appui (37) fait partie d'un évidement (17) prévu dans l'élément intérieur ou extérieur (12, 13) et à travers duquel peuvent passer les organes d'actionnement (14), susceptibles d'être déviés vers l'extérieur ou vers l'intérieur, pour venir en prise avec la partie réceptrice (21).

13. Dispositif d'assemblage selon une des revendications précédentes, caractérisé en ce que les organes d'actionnement (14) sont réalisés et/ou montés pour être élastiques en direction radiale, les organes d'actionnement (14) étant fabriqués en particulier en matériau élastique et ayant une forme essentiellement en S et/ou l'élément (12 ou 13) éloigné de la portion d'attaque (28) étant réalisé pour être élastique.

14. Dispositif d'assemblage selon une des revendications précédentes, caractérisé en ce que les portions d'attaque (28) présentent des biseaux d'entrée (27) pour établir la liaison à la position fermée (15) des organes d'actionnement (14).

15. Dispositif d'assemblage selon une des revendications précédentes, caractérisé en ce que les éléments intérieur et extérieur (12, 13) et les organes d'actionnement (14) sont réalisés d'un seul tenant en matière plastique.

16. Dispositif d'assemblage selon une des revendications précédentes, caractérisé en ce que le dispositif d'assemblage (11) et la partie réceptrice (21) sont reliés entre eux pour la formation d'une sécurité anti-perte (44) et/ou une sécurité empêchant la rotation.

17. Dispositif d'assemblage selon une des revendications précédentes, caractérisé en ce qu'une sécurité contre l'actionnement intempestif, en particulier une sécurité protège-enfants, est prévue sur le dispositif d'assemblage (11).

18. Dispositif d'assemblage selon une des revendications précédentes, caractérisé en ce qu'une garantie d'origine peut être mise en place sur le dispositif d'assemblage (11), en particulier sous la forme d'une liaison inter-éléments (12, 13) susceptible d'être rompue.

19. Dispositif d'assemblage selon une des revendications précédentes, caractérisé en ce que, s'il est prévu comme fermeture pour récipients ou analogues, le dispositif d'assemblage (11) comporte un élément intérieur (12) réalisé à la façon d'un couvercle et sur la surface de couvercle intérieure (38) duquel peut être placé un joint d'étanchéité (39).

20. Dispositif d'assemblage selon une des revendications précédentes, caractérisé en ce que le dispositif d'assemblage (11) est relié à une partie réceptrice (21).
